(19) Europäisches Patentamt
European Patent Office
Office européen des brevets

(11) **EP 3 945 309 B1**

(12) **FASCICULE DE BREVET EUROPEEN**

(45) Date de publication et mention de la délivrance du brevet:
**23.10.2024 Bulletin 2024/43**

(21) Numéro de dépôt: **21187603.2**

(22) Date de dépôt: **26.07.2021**

(51) Classification Internationale des Brevets (IPC):
**G01N 23/2055** (2018.01) **G01B 15/04** (2006.01)
**G01L 1/25** (2006.01) **G01N 23/207** (2018.01)
**G01B 15/06** (2006.01)

(52) Classification Coopérative des Brevets (CPC):
**G01N 23/2055; G01B 15/06; G01L 1/25;
G01N 23/207**

(54) **METHODE DE CARACTERISATION D'UNE VARIATION DE CONTRAINTE DANS UN FILM MINCE PAR DIFFRACTION DES RAYONS X**

VERFAHREN ZUR CHARAKTERISIERUNG EINER SPANNUNGSÄNDERUNG IN EINER DÜNNSCHICHT DURCH BEUGUNG VON RÖNTGENSTRAHLEN

METHOD FOR CHARACTERISING A STRESS VARIATION IN A THIN FILM BY X-RAY DIFFRACTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2020 FR 2008116**

(43) Date de publication de la demande:
**02.02.2022 Bulletin 2022/05**

(73) Titulaire: **Commissariat à l'énergie atomique et aux énergies alternatives
75015 Paris (FR)**

(72) Inventeur: **FILLOT, Frédéric
38054 GRENOBLE CEDEX 09 (FR)**

(74) Mandataire: **Brevalex
Tour Trinity
1 B Place de la Défense
92400 Courbevoie (FR)**

(56) Documents cités:
- **WANG LIANG-JI ET AL: "CONDENSED MATTER: STRUCTURE, MECHANICAL AND THERMAL PROPERTIES; Curvature Correction of FWHM in the X-Ray Rocking Curve of Bent Heteroepitaxial Films", CHINESE PHYSICS LETTERS, INSTITUTE OF PHYSICS PUBLISHING, BRISTOL, GB, vol. 26, no. 7, 1 July 2009 (2009-07-01), pages 76104, XP020159145, ISSN: 0256-307X**
- **KECKES J. ET AL: "High-temperature residual stresses in thin films characterized by x-ray diffraction substrate curvature method", REVIEW OF SCIENTIFIC INSTRUMENTS, vol. 78, no. 3, 1 March 2007 (2007-03-01), US, pages 036103, XP055794927, ISSN: 0034-6748, DOI: 10.1063/1.2535857**
- **FU WEI-EN ET AL: "Determination of Young's modulus and Poisson's ratio of thin films by X-ray methods", THIN SOLID FILMS, vol. 544, 1 October 2013 (2013-10-01), AMSTERDAM, NL, pages 201 - 205, XP055794929, ISSN: 0040-6090, DOI: 10.1016/j.tsf.2013.03.121**
- **SEGMULLER A ET AL: "X-ray diffraction studies of thin films and multilayer structures", PROGRESS IN CRYSTAL GROWTH AND CHARACTERIZATION, PERGAMON, OXFORD, GB, vol. 18, 1 January 1989 (1989-01-01), pages 21 - 66, XP025635858, ISSN: 0146-3535, [retrieved on 19890101], DOI: 10.1016/0146-3535(89)90024-5**

**Description**

**DOMAINE TECHNIQUE ET ÉTAT DE LA TECHNIQUE ANTÉRIEURE**

La présente invention se rapporte à une méthode de caractérisation d'une variation de contrainte dans un film mince par diffraction des rayons X.

Les dispositifs micro et nanoélectroniques mettent en oeuvre des couches minces. Lors de la fabrication des composants électroniques, les substrats subissent un « budget » thermique important qui peut engendrer fréquemment des problèmes mécaniques au cours de leur fabrication, notamment résultant des phénomènes de dilatation, de cristallisation, de changements de phase, de variation de volume, de diffusion... Ces problèmes mécaniques peuvent être des problèmes d'adhérence, d'apparition de contraintes, de création de trous (« voids » en terminologie anglo-saxonne), de création de défauts, de création d'extrusions...

Les phénomènes de dilatation, de cristallisation, de changements de phase, de variation de volume, de diffusion...génèrent généralement une variation de contrainte au sein de film mince. Par exemple lors d'un recuit, la température est augmentée, ce qui provoque l'apparition de ces phénomènes. Afin d'induire et de caractériser cette variation de contrainte, un cyclage thermique est appliqué et la variation de contrainte est mesurée à chaque palier de température ou en début et en fin du cyclage thermique. Or une correction de dilatation sur le paramètre de maille libre de contrainte doit être prise en compte pour le calcul des déformations associées. Il doit donc être tenu compte des coefficients de dilatation ou d'expansion thermique du substrat et du film mince, ce qui peut induire une erreur notamment en ce qui concerne la déformation du film mince.

Le document KECKES J. ET AL, High-temperature residual stresses in thin films characterized by x-ray diffraction substrate curvature method, REVIEW OF SCIENTIFIC INSTRUMENTS, vol. 78, no. 3, 1 mars 2007, page 036103, décrit une méthode de détermination par rayons X des dépendances de températures des contraintes macroscopiques dans des films minces.

**EXPOSÉ DE L'INVENTION**

C'est par conséquent un but de la présente invention d'offrir une méthode de caractérisation de la variation de contrainte dans un film mince par diffraction de rayons X permettant de s'affranchir de l'inconvénient mentionné ci-dessus.

Le but énoncé ci-dessus est atteint par une méthode de caractérisation de la variation de contrainte d'un film mince formé sur un substrat comprenant :

- l'application d'une température constante apte à faire passer le film mince d'un premier état à un deuxième état, le passage du premier état au deuxième état générant des contraintes au sein de film mince,
- la détermination de la variation contrainte dans le film par mesure de la rocking curve à partir d'une série de mesures de diffraction par diffraction de rayons X du substrat à différents instants.

La méthode permet donc une mesure de la variation de contrainte à température constante, ce qui permet de s'affranchir de l'incertitude sur le coefficient de dilatation.

Ainsi, il est possible par exemple d'acquérir des valeurs précises des variations de contrainte au sein de différentes couches minces et de pouvoir exploiter celle-ci par exemple lors des procédés de fabrication microélectronique

De manière avantageuse, la détermination de la variation de contrainte peut être combinée à la détermination de la déformation dans le plan par diffraction de rayons X du film mince dans son domaine élastique, et de la détermination de la déformation hors-plan à partir d'une série de mesures par diffraction de rayons X du film mince dans son domaine élastique à différents instants, permettant de déterminer le coefficient de poisson et le module d'Young du film mince.

La présente demande a alors pour objet une méthode de caractérisation d'une variation de contrainte dans un film mince formé sur un substrat, comportant l'application d'une température constante apte à faire passer le film mince d'un premier état à un deuxième état, le passage du premier état au deuxième état générant des contraintes au sein du film mince, et la détermination de la variation de contrainte dans le film par mesure de la largeur à mi-hauteur $\beta_{RC}$ de la rocking curve par diffraction de rayons X du substrat à partir d'une série de mesures de diffraction par diffraction de rayons X du substrat à différents instants durant l'application de ladite température.

Par exemple, la variation de contrainte est due à un passage d'un état au moins en partie amorphe à un état au moins en partie cristallin, un passage d'un état au moins en partie cristallin à un état au moins en partie amorphe, à un changement de volume, à un changement de phase, à une croissance de grain, à une densification, ou à une relaxation. L'échantillon est par exemple placé dans une chambre de recuit autorisant les rayons X à atteindre le film mince et la collecte des rayons X diffractés.

Selon une caractéristique additionnelle, la durée entre deux instants est au moins égale à la durée d'une mesure.

La méthode de caractérisation peut comporter :

- détermination de la déformation dans le plan à partir d'une série de mesures par diffraction de rayons X à différents instants à la température Tx,
- détermination de la déformation hors-plan à partir d'une série de mesures par diffraction de rayons X à différents instants à la température Tx,

- traçage de la variation de contrainte en fonction de la déformation hors-plan, obtention d'une régression linéaire sur au moins un intervalle de ladite variation et calcul de la pente de la régression linéaire qui est égale à -E/2v,
- traçage de l'évolution de contrainte en fonction de la déformation dans le plan, obtention d'une régression linéaire sur au moins un intervalle de ladite variation et calcul la pente de ladite régression linéaire qui est égale à E/1-v, et
- détermination du module d'élasticité E et le coefficient de poisson v à partir des valeurs de pentes obtenues aux étapes précédentes.

Un traitement peut être appliqué au film mince entre deux séries de mesures de sorte qu'il soit dans le premier état, par exemple amorphe.

Pour la détermination de la variation de contrainte, une mesure de diffraction de rayons X à haute résolution du substrat a avantageusement lieu.

Selon une caractéristique additionnelle, le film mince formé sur le substrat est déposé sur une platine qui n'est pas une platine de traction. Celle-ci n'autorise pas l'application d'un effort de traction sur le film mince.

## BRÈVE DESCRIPTION DES DESSINS

La présente invention sera mieux comprise sur la base de la description qui va suivre et des dessins en annexe sur lesquels:

La figure 1 est une représentation schématique d'un appareillage de mesure par diffraction de rayons X pouvant être utilisé pour la mise en oeuvre de la méthode selon l'invention.

La figure 2 est une représentation de rocking curves à différents instants de mesure pour un film mince de GST à la température Tx = 125°C.

La figure 3 est une représentation de l'évolution du $\beta_{RC}$ en fonction du temps t en min calculée à partir des rocking curves de la figure 2.

La figure 4 représente la variation de $\Delta\sigma$ ($\Delta\beta_{RC}$).

La figure 5 est une représentation de l'évolution du paramètre de maille hors-plan en Angström en fonction du temps t en min pour un film mince de GST à la température Tx = 125°C.

La figure 6 est une représentation de l'évolution du paramètre de maille dans le plan en Angström en fonction du temps t en min pour le film mince de GST à la température Tx = 125°C.

La figure 7A est une représentation de l'évolution de la variation de contrainte $\Delta\sigma$ en MPa de la couche de GST en fonction de la déformation dans le plan à la température Tx= 125°C.

La figure 7B est une représentation de l'évolution de la variation de contrainte $\Delta\sigma$ en MPa de la couche de GST en fonction de la déformation hors-plan à la température Tx= 125°C.

## EXPOSÉ DÉTAILLÉ DE MODES DE RÉALISATION PARTICULIERS

La méthode de caractérisation selon l'invention a pour but de caractériser une variation de contrainte au sein d'un film mince déposé sur un substrat.

Les expressions « couche mince » ou « film mince » sont considérées comme synonymes. L'échantillon E comporte une couche mince C en un matériau donné, formée sur un substrat S en un autre matériau au moins en partie cristallin. La couche mince C est par exemple formée par dépôt ou par épitaxie.

La couche mince C présente une épaisseur hf comprise entre 2 nm et 100 $\mu$m, de préférence 2nm et 1 $\mu$m, plus particulièrement l'épaisseur du film mince dans l'exemple est de 500 nm. La couche mince est par exemple formée par dépôt physique en phase vapeur ou dépôt chimique en phase vapeur.

Le substrat S est monocristallin et a une épaisseur hs comprise entre 10$\mu$m et 1000$\mu$m. Selon l'exemple, l'épaisseur du substrat est de 250 $\mu$m.

La méthode selon un exemple de réalisation comporte :

- l'application d'une température constante capable de provoquer une modification structurale du film mince qui génère alors une variation de contrainte dans le film mince, et
- la détermination de la variation de contrainte in situ en déterminant la variation du $\beta_{RC}$ de la rocking curve par diffraction de rayons X du substrat. Ces deux étapes sont simultanées.

Les différentes étapes vont être décrites en détail ci-dessous.

Les mesures de diffraction de rayons X ou RX sont réalisées avec un diffractomètre de rayons X à goniomètre permettant d'orienter l'échantillon et le détecteur selon différents angles.

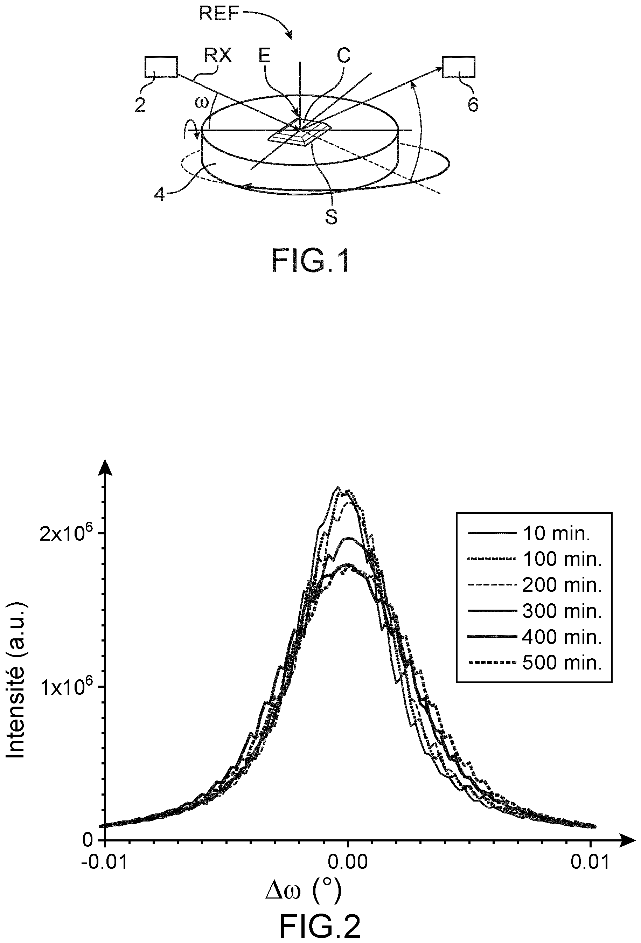

Sur la figure 1, on peut voir une représentation schématique d'un diffractomètre REF comportant une source 2 de rayons X, un porte-échantillon 4 et un détecteur 6 des rayons X diffractés. Le détecteur 6 est par exemple un dispositif scintillateur ponctuel. Par exemple, la source de rayons X 2 est par exemple un tube à rayons X, un générateur à anode tournante, une source synchrotron, ou une micro-source à rayons X microfocus.

Le porte-échantillon 4, destiné à supporter l'échantillon E, est monté articulé autour d'au moins trois axes du plan pour modifier l'orientation de l'échantillon par rapport au faisceau incident. Le détecteur 6 est également avantageusement mobile autour d'au moins deux axes.

Les différentes orientations pouvant être prises par le porte-échantillon et par le détecteur sont celles permettant les différentes mesures requises par la méthode selon l'invention.

Le diffractomètre REF comporte également des optiques sur le trajet du faisceau incident et sur le trajet des rayons X diffractés. Ces optiques sont avantageusement adaptables en fonction des mesures réalisées.

La méthode de caractérisation selon l'invention ne requiert pas que le film mince soit réalisé avec un soin particulier.

Lors de l'application d'une température constante, on choisit une température Tx apte à provoquer une modification structurale du film mince.

Dans la présente demande, on entend par modification structurale : une variation de volume résultant d'une transition de phase, par exemple du passage d'un empilement cubique à un empilement hexagonal, une cristallisation en partant d'une couche mince amorphe ou en partie amorphe, ou d'une amorphisation en partant d'une couche mince cristallisée ou en parti cristallisée, une croissance de grains, une densification, un changement de phase, une relaxation, etc.

La modification structurale modifie la contrainte dans le film. Toute variation de paramètre de maille correspond à une modification de déformation et donc de contrainte dans la couche mince C. A température constante, la dilatation n'induit pas de variation sur le paramètre de maille.

La variation de la contrainte ou de déformation peut résulter d'une ou plusieurs modifications structurales.

Les mécanismes de variation de contrainte ou de déformation dépendent du matériau du film mince.

La valeur de la température constante est choisie de sorte à provoquer la modification structurale et de manière à rendre compatible la cinétique de mesure et la cinétique de la modification structurale du film, par exemple la cinétique de cristallisation, i.e. la température constante choisie est telle qu'elle provoque cette modification structurale dans un temps adapté à une mesure par diffraction RX, et à synchroniser la cinétique de mesure et la cinétique de cristallisation.

Dans le cas d'un film mince en cuivre, la température choisie est par exemple comprise entre 150°C et 250°C, température à laquelle on observe une croissance des grains et une relaxation. Dans le cas d'un film de $Ni_xSi_y$, on observe une transition de phase provoquant une variation de volume à une température entre 200°C et 300°C.

La température est choisie de sorte à être inférieure à la température de fusion du film mince et du substrat.

De préférence, on choisit un substrat de bonne qualité monocristalline, i.e. un substrat sans défauts structuraux cristallins pour augmenter la précision de mesure.

De préférence également, on choisit une épaisseur de film importante et/ou une épaisseur de substrat faible pour augmenter la précision de mesure, de préférence $hs^2/hf < 0.3$.

L'étape de détermination de la variation de contrainte consiste à mesurer la « rocking curve » RC (désignée courbe d'oscillation en français) du substrat, i.e. la variation du signal en fonction de l'angle $\omega$ entre le faisceau incident et la surface de l'échantillon (figure 1).

De préférence, des optiques très résolues sont utilisées.

On souhaite mesurer la largeur à mi-hauteur ou FWHM (Full Width at Half Maximum en terminologie anglo-saxonne) de la rocking curve. Cette mesure est désignée $\beta_{RC}$.

On réalise donc une mesure des rayons X diffractés du substrat en faisant varier l'angle $\omega$ et en condition de diffraction sur le substrat. Lors de l'étape b), l'échantillon est pivoté de sorte à modifier l'angle $\omega$ entre le faisceau incident et la surface de l'échantillon. La mesure consiste à acquérir les rayons X diffractés pour les différents angles afin d'obtenir un courbe RC complète afin de pouvoir mesurer le $\beta_{RC}$.

L'acquisition est en continue.

On trace la courbe correspondante et on mesure le $\beta_{RC}$, par ajustement de la courbe.

En appliquant la température Tx, le film mince subit une modification structurale qui génère une variation de contrainte lors de la mesure de la rocking curve. On mesure donc une variation de $\beta_{RC}$, i.e. $\Delta\beta_{RC}$ en fonction de la variation de contrainte $\Delta\sigma$.

Il est à noter qu'il est fait l'hypothèse que l'on connaît de la littérature les constantes élastiques du substrat Es, vs, et que l'on peut mesurer l'épaisseur du substrat hf et celle du film mince hs, ainsi que la géométrie du goniomètre, en particulier la largeur W et de l'angle de Bragg $\theta_B$.

La variation de contrainte est alors exprimée de la façon suivante et est donc directement proportionnelle à la variation de $\beta_{RC}$ mesurée.

$$\Delta\sigma_\square = \frac{E_s \cdot h_s^2}{6(1-\nu_s) \cdot h_f} \cdot \frac{\sin\theta_B}{W} \cdot \Delta\beta_{RC} \quad (I)$$

La mesure de l'évolution de la largeur à mi-hauteur $\Delta\beta_{RC}$ permet donc de calculer la variation de la contrainte $\Delta\sigma$ de la couche C.

De manière très avantageuse, la connaissance de la variation de contrainte $\Delta\sigma$ permet de calculer les constantes élastiques d'un film mince au moins en partie cristallin.

Les constantes élastiques sont le module élastique ou module d'Young, généralement désigné E, et qui est la contrainte mécanique qui engendrerait un allongement de 100% de la longueur initiale d'un matériau, et le coefficient de Poisson, généralement désigné v, qui permet de caractériser la contraction de la matière perpendiculairement à la direction de l'effort appliqué.

Le substrat est au moins en partie cristallin pour la diffraction RX.

Pour cela, on détermine la déformation hors-plan du film mince par diffraction de rayons X et la déformation dans le plan du film mince par diffraction de rayons X, en appliquant la variation de contrainte $\Delta\sigma$.

Pour déterminer les déformations hors-plan et dans le plan, le diffractomètre est réglé pour permettre la mesure des paramètres de maille du film mince.

Pour déterminer la déformation hors-plan, l'échantillon est orienté et le détecteur tourne de manière à faire diffracter les plans inter-réticulaires hors-plan. Les signaux obtenus forment un pic de diffraction qui permet de mesurer le paramètre de maille d dans la direction hors-plan et de déterminer la déformation hors-plan $\varepsilon\perp$ en utilisant la formule suivante :

$$\varepsilon_{\perp} = \frac{d_{\perp} - d_0}{d_0} \text{ (III)}$$

avec d0 le paramètre de maille dans un état relaxé.

Cette technique de calcul du paramètre de maille est connue de l'homme du métier.

La mesure s'effectuant sous variation de contrainte, on détermine $\Delta\varepsilon_{\perp}$.

Pour déterminer la déformation dans le plan, l'optique est changée et le goniomètre est réglé de manière connue. L'échantillon est ensuite orienté et le détecteur tourne de manière à faire diffracter les plans inter-réticulaires dans le plan, ce qui permet de mesurer le paramètre de maille de la couche mince dans la direction du plan.

Les signaux obtenus forment un pic de diffraction qui permet de mesurer le paramètre de maille d dans la direction du plan et de déterminer la déformation dans le plan $\varepsilon_{//}$ en utilisant la formule suivante :

$$\varepsilon_{\parallel} = \frac{d_{\parallel} - d_0}{d_0} \text{ (III)}$$

Avec d0 le paramètre de maille dans un état relaxé.

La mesure s'effectuant sous variation de contrainte, on détermine $\Delta\varepsilon_{//}$.

La déformation dans le plan et la déformation hors-plan sont reliées par la relation suivante,

$$\frac{\varepsilon_{\perp}}{\varepsilon_{//}} = \frac{-2\upsilon}{1 - \upsilon} \text{ (IV)}$$

Il est possible de déterminer le coefficient de Poisson.

Ensuite, on détermine le module d'élasticité E (module de Young) de la couche C.

Dans un film mince polycristallin, la déformation en fonction de la contrainte s'écrit :

$$\varepsilon^{\psi} = \frac{1+\upsilon}{E} sin^2 \psi.\sigma - \frac{2\upsilon}{E}.\sigma \text{ (V)}$$

avec $\varepsilon$ la déformation, $\sigma$ la contrainte bi axiale, E le module d'Young et v le coefficient de Poisson. L'angle $\psi$ est l'angle de tilt des plans considérés.

Dans la direction hors-plan,

$$\psi = 0°, \varepsilon\perp = (-2\upsilon/E)\times\sigma \text{ (V)}$$

Dans la direction dans le plan

$$\psi = 90°, \varepsilon_{//} = (1-\upsilon/E) \times\sigma \text{ (VI)}$$

En traçant la variation $\varepsilon_{\perp}$ en fonction de $\sigma$ et $\varepsilon_{//}$ en fonction de $\sigma$, le module d'élasticité E peut donc être calculé à partir des pentes de la courbe $\varepsilon = f(\sigma)$.

Un exemple va être décrit pour illustrer la méthode de calcul des constantes élastiques en appliquant une sollicitation au film mince à température constante dans le domaine élastique du film mince.

Le film mince est un verre amorphe, par exemple un GST (Germanium Antimoine Tellure). L'échantillon comporte un substrat en silicium orienté <001>. En variante, le substrat peut être orienté <111> ou selon une autre orientation. La couche mince a une épaisseur de 500 nm. Le substrat a dans cet exemple une épaisseur de 230 $\mu$m

L'installation de mesure comporte une chambre de recuit sous vide primaire qui peut être installée sur le goniomètre, dans laquelle est placé l'échantillon afin de lui appliquer une température de recuit Tx constante, et ainsi faire passer progressivement le film mince d'un état amorphe à un état au moins en partie cristallisé. La température de recuit est par exemple égale à 125°C. La chambre de recuit est telle qu'elle permet l'illumination de l'échantillon par le faisceau incident et la collecte des rayons diffractés par le détecteur. La cristallisation progressive du film mince provoque une variation des déformations hors-plan et dans le plan du film, et donc une variation de la contrainte dans le film mince. La valeur de la température constante est choisie de manière à rendre compatible la cinétique de mesure et la cinétique de cristallisation.

Lors d'une étape, on détermine la variation de contrainte.

Avantageusement les optiques du diffractomètre sont choisies pour effectuer une mesure de diffraction haute résolution

On place l'échantillon à la température choisie Tx et l'échantillon est pivoté de sorte à modifier l'angle $\omega$ entre le faisceau incident et la surface de l'échantillon, afin d'acquérir les rayons X diffractés pour différents angles, dans le but d'obtenir une courbe RC complète et déter-

miner le $\beta_{RC}$. Sur la figure 2, on peut voir un exemple de rocking curve représentant la variation d'intensité diffractée en fonction de la variation d'angle $\Delta\omega$ en degrés ° aux différents instants de mesure.

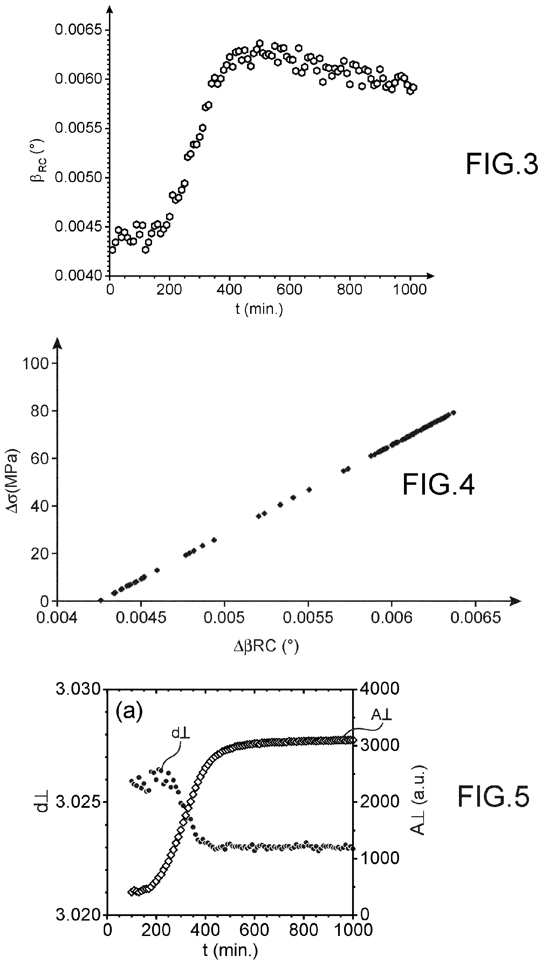

Sur la figure 3, on peut voir la variation de $\beta_{RC}$ en degrés °, déterminée à partir de la courbe RC, en fonction du temps en minutes. La mesure de $\beta_{RC}$ présente également une variation au cours de 500 premières minutes. L'augmentation du $\beta_{RC}$ indique une évolution de la courbure. Ces variations sont en cohérence avec une mise en tension progressive du matériau, ce qui démontre l'efficacité de la sollicitation à température constante pour faire varier la contrainte (ou la déformation) dans le film mince. Entre 500 min et 1000 min, le $\beta_{RC}$ diminue très légèrement, ce qui correspond à une relaxation.

Cette variation est directement proportionnelle à la variation de contrainte $\Delta\sigma$ (formule III).

En connaissant les constantes de la formule II et ayant mesuré $\Delta\beta_{RC}$, on peut calculer la variation de contrainte $\Delta\sigma$.

La figure 4 représente la variation de $\Delta\sigma$ ($\Delta\beta_{RC}$) obtenue pour l'exemple du film de GST.

Lors d'une autre étape, on place l'échantillon à la température constante choisie et on effectue des mesures de diffraction par rayons X pendant une durée suffisante pendant laquelle la cristallisation va avoir lieu. Les mesures sont effectuées de manière ponctuelle, par exemple à intervalle régulier, l'intervalle de temps étant au moins égal à la durée d'acquisition du signal de diffraction RX, par exemple de l'ordre de 10 min. Les optiques sont modifiées.

Sur la figure 5, on peut voir l'évolution du paramètre de maille d hors plan ($d\perp$) du film mince en Angström en fonction du temps en minutes et l'aire du pic de diffraction $A_\perp$, i.e. l'intensité des faisceaux diffractés, lors de la mesure de diffraction. Le paramètre de maille $d\perp$ hors-plan est calculé à partir de la position du pic de diffraction.

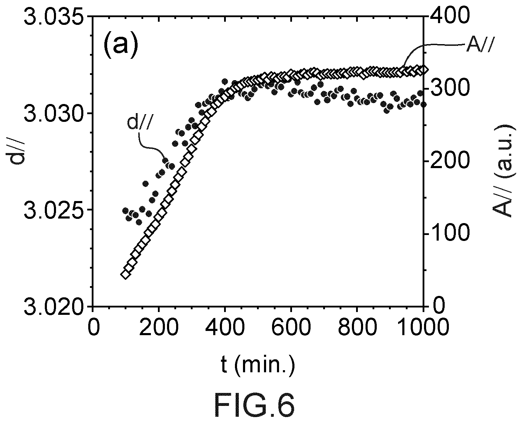

Sur la figure 6, on peut voir l'évolution du paramètre de maille d ($d/\!/$) dans le plan du film mince en Angström en fonction du temps en min et l'aire $A_{/\!/}$ du pic de diffraction, i.e. l'intensité des faisceaux diffractés, de la mesure de diffraction. Le paramètre de maille $d_{/\!/}$ dans le plan est calculé à partir de la position du pic de diffraction.

Ces mesures de diffraction RX ne sont pas simultanées, on effectue par exemple en premier les mesures pour le paramètre de maille hors-plan et en deuxième celles pour le paramètre de maille dans le plan.

On constate que les paramètres de maille hors-plan et dans le plan évoluent durant les 500 premières minutes, puis deviennent sensiblement constants. Le paramètre de maille dans le plan augmente et le paramètre de maille hors plan diminue. Ceci est caractéristique d'une mise en tension (contrainte positive) du matériau au cours du recuit isotherme. On remarque également que pendant les premières étapes de la nucléation, pour des temps d'environ 100 minutes, que le paramètre de maille dans le plan et hors-plan est quasiment le même, environ 3,0255 Å, et que cette valeur correspond au paramètre de maille libre de contrainte.

Dans la présente demande, on entend par «valeur sensiblement constante », une valeur qui varie dans un intervalle de + ou - 10% par rapport à une valeur donnée.

Lors d'une étape suivante, à partir des valeurs de paramètres de maille dans le plan et hors-plan, on peut calculer la déformation dans le plan $\varepsilon_{/\!/}$ et la déformation hors-plan $e\perp$ en utilisant la formule (I). $d_0$ peut être déterminé en faisant l'hypothèse que dans les tous premiers stades initiaux de nucléation du GST, le matériau est relaxé, on peut donc extraire la valeur de $d_0$ de la figure 4 ou de la figure 5, il est égal à 3,0255 Å.

Dans cet exemple, l'échantillon a été séparé en trois parties, avec une partie utilisée pour l'étape de détermination de la variation de contrainte, une partie utilisée pour la détermination de la variation de déformation hors-plan, et une autre partie est utilisée pour la détermination de la variation de déformation hors-plan.

Dans un autre exemple, les mesures sont automatisées et les différentes étapes sont enchaînées avec, entre chaque étape, un changement d'optique automatisé, ce qui permet de réaliser la série de mesure sur la même partie d'échantillon et lors du même recuit. Le programme de mesure est alors exécuté une seule fois.

Dans un autre exemple, entre chaque étape le film est rendu amorphe et subit l'étape suivante et le recuit suivant. Le film est rendu amorphe en le chauffant de sorte à ce que le matériau du film atteigne sa température de fusion et qu'il soit vitrifié.

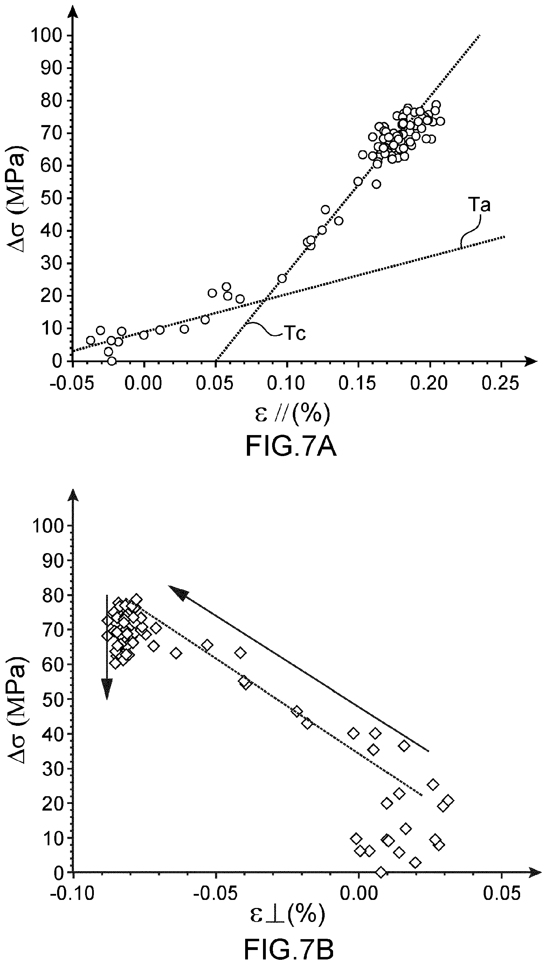

On peut ensuite tracer la courbe de variation de contrainte $\Delta\sigma$ en fonction de la déformation dans le plan $\varepsilon_{/\!/}$ et la déformation hors-plan $\varepsilon\perp$ en utilisant les calculs de la déformation dans le plan $\varepsilon_{/\!/}$ et de la déformation hors-plan $\varepsilon\perp$ (figures 7A et 7B).

Sur la figure 7A, on constate que la première partie de la courbe n'est pas linéaire du fait de la cristallisation.

Après 500 minutes, ce qui correspond sensiblement à la partie de la courbe entre 60 MPa et 80 MPa sur la figure 7A, on retrouve le comportement élastique qui correspond au matériau complètement cristallisé.

En utilisant les mesures sur la phase complètement cristallisée (quasi cristalline), pour lesquelles la partie de la courbe de variation de contrainte ($\Delta\sigma$) en fonction de la déformation est quasiment linéaire à la fois en fonction de la déformation dans le plan et hors-plan, on peut déterminer la valeur de E/1-v qui est la pente de la courbe de déformation dans la plan - contrainte, et la valeur -E/2v qui est la pente de la courbe de déformation hors-plan - contrainte.

On peut alors déterminer E et v en résolvant le système de deux équations à deux inconnus. On obtient : E = 34 GPa et $v$ = 0,34
La partie de la courbe déformation dans le plan - contrainte avant les 500 minutes n'est pas linéaire car le matériau du film mince n'est pas complètement cristallisé. En choisissant le coefficient de Poisson égal par exemple à 0,28, qui est une valeur courante pour un verre, il est possible de déterminer le module de Young de la couche très faiblement cristallisée en traçant la tangente Ta à la courbe et en mesurant sa pente. On peut également calculer le module d'Young du matériau cristallisé en traçant la tangente Tc à la partie de la courbe après 500 min. On obtient : $E_{cristallin} = 37$ GPa et $E_{amorphe}$ = 9 GPa La droite Tc correspondant à la zone cristalline et la droite Ta, est une extrapolation pour la zone amorphe. Entre les deux états limites, une tangente intermédiaire correspondant à un état intermédiaire, présentant des parties amorphes et des parties cristallines, peut être tracée. Un module d'Young de cet état intermédiaire peut être alors calculé. La méthode de caractérisation à température constante selon l'invention permet de déterminer la variation de contrainte relative $\Delta\sigma$ dans un film mince uniquement liée au mécanisme du phénomène de modification structurale en jeu lors de l'isotherme en s'affranchissant de l'incertitude sur le coefficient de dilatation.

En outre, la méthode ne nécessite pas de préparation d'échantillon spécifique, par exemple une couche mince déposée sur un substrat monocristallin, par exemple un substrat en silicium orienté 001 convient.

La méthode de détermination du coefficient de Poisson et du module d'élasticité permet de travailler sur une petite surface d'échantillon pour mesurer la courbure de l'échantillon, par exemple quelques mm$^2$, alors que la méthode x-map nécessite une plus grande surface, par exemple au moins 1 cm$^2$.

La méthode de ne nécessite pas d'utiliser un diffractomètre comportant une platine de translation pour faire du x-map : ce type de platine est souvent incompatible avec les modes diffraction dans le plan.

La méthode de détermination peut être mise en oeuvre grâce à un diffractomètre qui change automatiquement d'optiques et de configurations pour réaliser les trois séries de mesures successivement. Ainsi, l'acquisition des différentes mesures requises par la méthode peut être réalisée en une seule exécution du programme de mesures.

Le fait de fait de travailler à température constante limite les effets de variation de dilatation du goniomètre et de la platine de recuit, ce qui limite les alignements nécessaires. La fiabilité de mesure est améliorée en réduisant les éventuelles erreurs d'alignement principalement sur la mesure des déformations et des contraintes.

Le fait de travailler à température constante permet également d'effectuer toutes les mesures sur le même échantillon.

**Revendications**

1. Méthode de caractérisation d'une variation de contrainte dans un film mince formé sur un substrat, ladite méthode étant **caractérisée en ce qu'**elle comporte l'application d'une température constante apte à provoquer une modification structurale du film mince faisant passer le film mince d'un premier état à un deuxième état, le passage du premier état au deuxième état générant alors une variation de contrainte dans le film mince, et la détermination de la variation de contrainte dans le film liée au passage du premier état au deuxième état du fait de la modification structurale, lors de l'application de la température constante, par mesure de la largeur à mi-hauteur $\beta_{RC}$ de la rocking curve par diffraction de rayons X du substrat à partir d'une série de mesures de diffraction par diffraction de rayons X du substrat à différents instants durant l'application de ladite température.

2. Méthode de caractérisation selon la revendication 1, dans laquelle la variation de contrainte est due à un passage d'un état au moins en partie amorphe à un état au moins en partie cristallin, un passage d'un état au moins en partie cristallin à un état au moins en partie amorphe, à un changement de volume, à un changement de phase, à une croissance de grain, à une densification, ou à une relaxation.

3. Méthode de caractérisation selon la revendication 1 ou 2, dans laquelle l'échantillon est placé dans une chambre de recuit autorisant les rayons X à atteindre le film mince et la collecte des rayons X diffractés.

4. Méthode de caractérisation selon l'une des revendications 1 à 3, comportant :

    - détermination de la déformation dans le plan à partir d'une série de mesures par diffraction de rayons X à différents instants à la température Tx,
    - détermination de la déformation hors-plan à partir d'une série de mesures par diffraction de rayons X à différents instants à la température Tx,
    - traçage de la variation de contrainte en fonction de la déformation hors-plan, obtention d'une régression linéaire sur au moins un intervalle de ladite variation et calcul de la pente de la régression linéaire qui est égale à -E/2v,
    - traçage de l'évolution de contrainte en fonction de la déformation dans le plan, obtention d'une régression linéaire sur au moins un intervalle de ladite variation et calcul la pente de ladite régression linéaire qui est égale à E/1-v, et
    - détermination du module d'élasticité E et le coefficient de poisson v à partir des valeurs de pentes obtenues aux étapes précédentes.

5. Méthode de détermination selon la revendication 4, dans laquelle un traitement est appliqué au film mince entre deux séries de mesures de sorte qu'il soit dans le premier état, par exemple amorphe.

6. Méthode de détermination selon l'une des revendications 1 à 5, dans laquelle pour la détermination de la variation de contrainte, une mesure de diffraction de rayons X à haute résolution du substrat a lieu.

7. Méthode de détermination selon l'une des revendications 1 à 6, dans laquelle le film mince formé sur le substrat est déposé sur une platine qui n'autorise pas l'application d'un effort de traction sur le film mince.

**Patentansprüche**

1. Verfahren zum Charakterisieren einer Spannungsschwankung in einem Dünnfilm, der auf einem Substrat ausgebildet ist, wobei das Verfahren **dadurch gekennzeichnet ist, dass** es das Anwenden einer konstanten Temperatur, die dazu geeignet ist, eine strukturelle Änderung des Dünnfilms zu bewirken, die den Dünnfilm von einem ersten Zustand in einen zweiten Zustand übergehen lässt, wobei der Übergang vom ersten Zustand in den zweiten Zustand dann eine Spannungsschwankung im Dünnfilm erzeugt, und das Bestimmen der Spannungsschwankung im Dünnfilm, die mit dem Übergang vom ersten Zustand zum zweiten Zustand aufgrund der strukturellen Änderung verbunden ist, beim Anwenden der konstanten Temperatur durch Messen der Halbwertsbreite $\beta_{RC}$ der Rocking-Kurve durch Röntgenbeugung des Substrats anhand einer Reihe von Röntgenbeugungsmessungen des Substrats zu verschiedenen Zeitpunkten während des Anwendens der Temperatur umfasst.

2. Charakterisierungsverfahren nach Anspruch 1, wobei die Spannungsschwankung auf einen Übergang von einem zumindest teilweise amorphen Zustand in einen zumindest teilweise kristallinen Zustand, einen Übergang von einem zumindest teilweise kristallinen Zustand in einen zumindest teilweise amorphen Zustand, eine Volumenänderung, eine Phasenänderung, ein Kornwachstum, eine Verdichtung oder eine Entspannung zurückzuführen ist.

3. Charakterisierungsverfahren nach Anspruch 1 oder 2, wobei die Probe in eine Temperkammer gegeben wird, die es zulässt, dass die Röntgenstrahlen den Dünnfilm erreichen und dort die gebeugten Röntgenstrahlen gesammelt werden.

4. Charakterisierungsverfahren nach einem der Ansprüche 1 bis 3, das Folgendes umfasst:

   - Bestimmen der Verformung in der Ebene anhand einer Messreihe durch Röntgenbeugung zu verschiedenen Zeitpunkten bei der Temperatur Tx,
   - Bestimmen der Verformung außerhalb der Ebene anhand einer Messreihe durch Röntgenbeugung zu verschiedenen Zeitpunkten bei der Temperatur Tx,
   - Verfolgen der Spannungsschwankung in Abhängigkeit von der Verformung außerhalb der Ebene, Erhalten einer linearen Regression über mindestens ein Intervall der Schwankung und Berechnen der Steigung der linearen Regression, die gleich -E/2v ist,
   - Verfolgen der Spannungsentwicklung in Abhängigkeit von der Verformung in der Ebene, Erhalten einer linearen Regression über mindestens ein Intervall der Schwankung und Berechnen der Steigung der linearen Regression, die gleich E/1-v ist, und
   - Bestimmen des Elastizitätsmoduls E und der Poissonzahl v anhand der in den vorherigen Schritten erhaltenen Steigungswerten.

5. Bestimmungsverfahren nach Anspruch 4, wobei der Dünnfilm zwischen zwei Messreihen einer Behandlung unterzogen wird, so dass er sich im ersten, zum Beispiel amorphen, Zustand befindet.

6. Bestimmungsverfahren nach einem der Ansprüche 1 bis 5, wobei zum Bestimmen der Spannungsschwankung eine hochauflösende Röntgenbeugungsmessung des Substrats stattfindet.

7. Bestimmungsverfahren nach einem der Ansprüche 1 bis 6, wobei der auf dem Substrat ausgebildete Dünnfilm auf eine Platte aufgetragen wird, die das Aufbringen einer Zugkraft auf den Dünnfilm nicht zulässt.

**Claims**

1. Method for characterising a variation in strain in a thin film formed on a substrate, said method being **characterised in that** it includes the application of a constant temperature able to cause a structural modification of the thin film causing the thin film to pass from the first state to a second state, the passage from the first state to the second state then giving rise to a variation in strain in the thin film, and the determination of the variation in strain in the film related to the passage from the first state to the second state because of the structural modification, when the constant temperature is applied, by measuring the half-height width $\beta_{RC}$ of the rocking curve by X-ray diffraction of the substrate using a series of diffraction measurements by X-ray diffraction of the substrate at various instants during the application of said temperature.

2. Characterisation method according to claim 1, wherein the variation in strain is due to a passage from an at least partly amorphous state to an at least partly crystalline state, a passage from an at least partly crystalline state to an at least partly amorphous state, to a change in volume, to a change in phase, to a grain growth, to a densification, or to a relaxation.

3. Characterisation method according to claim 1 or 2, wherein the sample is placed in an annealing chamber allowing the X-rays to reach the thin film and collection of the diffracted X-rays.

4. Characterisation method according to one of claims 1 to 3, including:

- determining the deformation in the plane from a series of measurements by X-ray diffraction at various instants at the temperature Tx,
- determining the out-of-plane deformation from a series of measurements by X-ray diffraction at various instants at the temperature Tx,
- plotting the variation in strain as a function of the out-of-plane deformation, obtaining a linear regression on at least one interval of said variation and calculating the slope of the linear regression, which is equal to -E/2v,
- plotting the change in strain as a function of the in-plane deformation, obtaining a linear regression of at least one interval of said variation and calculating the slope of said linear regression, which is equal to E/1-v, and
- determining the modulus of elasticity E and the Poisson's ratio v from the values of slopes obtained at the preceding steps.

5. Determination method according to claim 4, wherein a processing is applied to the thin film between two series of measurements so that it is in the first state, for example amorphous.

6. Determination method according to one of claims 1 to 5, wherein, for determining the variation in strain, a high-resolution X-ray diffraction measurement of the substrate takes place.

7. Determination method according to one of claims 1 to 6, wherein the thin film formed on the substrate is deposited on a plate that does not allow application of a tensile force on the thin film.

FIG.1

FIG.2

FIG.3

FIG.4

FIG.5

FIG.6

FIG.7A

FIG.7B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KECKES J. et al.** High-temperature residual stresses in thin films characterized by x-ray diffraction substrate curvature method. *REVIEW OF SCIENTIFIC INSTRUMENTS,* 01 Mars 2007, vol. 78 (3), 036103